# EUROPEAN PATENT APPLICATION

(11) **EP 4 764 504 A1**
(43) Date of publication of application: **24.06.2026**
(21) Application number: 24221200.9
(22) Date of filing: 18.12.2024
(51) Int. Cl.: G01N 35/04, G01N 35/00

(54) **TURNTABLE AND TRANSPORTATION SYSTEM WITH TURNTABLE FOR BIOLOGICAL SAMPLES**

(71) Applicant: Beckman Coulter, Inc., Brea, CA 92821 (US)
(72) Inventor: Krafczyk, Thomas, 82140 Olching (DE); Mueller, Martin, 83727 Schliersee (DE)
(74) Representative: Paustian & Partner Patentanwälte mbB

(57) **Abstract**

A first aspect of the present disclosure is related to a turntable for moving biological samples,
configured to:
- receive a plurality of carriers from at least a first transportation element;
- move the plurality of carriers to at least a second transportation element;
- relieve the plurality of carriers individually to at least the second transportation element;
wherein the movement from the first transportation element to at least the second transportation element is performed by a rotating means of the turntable.

## Description

### Technical Field

This disclosure is related to turntables for connecting track segments of a transport system for biological samples and tube transport systems comprising such turntables.

### Background

A tube transport system in a laboratory automates the movement of tubes containing biological samples between various workstations. It can consist of a network of conveyors, robotic arms, and sensors. Tubes are placed onto the conveyor, which transports them to designated locations, such as centrifuges, analyzers, or storage units. Such a system can enhance workflow efficiency, minimize human error, and speed up sample processing. Therefore, tube transport systems are an important part of a laboratory. Improvements are desirable.

### Summary

An object of the present disclosure is to improve an automated transportation of biological samples.

This object is solved by the disclosed embodiments, which are defined in particular by the subject matter of the independent claims. The dependent claims provide information for further embodiments. Various aspects and embodiments of these aspects are also disclosed in the summary and description below, which provide additional features and advantages.

A first aspect of the present disclosure is related to a turntable for moving biological samples,
*configured to:*
- *receive a plurality of carriers from at least a first transportation element ;*
- *move the plurality of carriers to at least a second transportation element ;*
- *relieve the plurality of carriers individually to at least the second transportation element;*
*wherein the movement from the first transportation element to at least the second transportation element is performed by a rotating means of the turntable.*

A carrier for biological samples is configured to carry tubes in which comprise a biological sample each. A carrier can be a secure container that safely holds specimens, like blood or urine, for transit within facilities. It prevents contamination, spillage, and damage, and is compatible with pneumatic tube systems, ensuring quick, efficient, and safe transport between locations. The turntable can move carriers with tubes and/or carriers without tubes.

According to the present disclosure a transportation element can be a straight and/or curved, extended element that is configured to move one or more objects along a certain straight and/or curved distance, i.e., along a transportation path. Such transportation elements can be used, in particular, in the biological and/or chemical industry to move tube/tubes between different workstations such as a centrifuge, an analyzer, a storage unit, a freezer, and/or a dispatch station etc. The respective transportation element comprises a conveying means, for instance, one or more of the following: a conveyor belt, a chain conveyor, an apron conveyer, a roller conveyor (optionally lineshaft-driven). Two or more transportation elements or transportation lanes of one transportation element can be combined with one or more turntables to form a transportation system, which is explained in more detail below.

The respective tube is for instance a laboratory sample container made of glass, plastic or metal, for example a test tube (also known as culture tube or sample tube), wherein the tubes can be uniform or of different shape and/or size. During their transportation by means of the transportation elements, the respective tube can contain a sample or be empty. The tubes can be placed on the conveying means so that the tubes rest on an upward-facing surface of the conveying means. The tubes can be held in place and prevented from upset by means of a respective tube carrier in which the tube, particularly a connecting section of the same, fits positively-locking. So, the tube carrier acts as an adapter for tubes that will not remain in a stable upright position on their own but will upset without external stabilization. The tube carrier or adapter, respectively, keeps the tubes upright rendering them safely transportable by the transportation means. The tube carrier can be detachably mounted to the conveying means of the transportation element or be put freely on the upward-facing surface of the conveying means. Herein, the object moved by the transportation means can therefore be the tube or the sole tube carrier or the tube sitting in the tube carrier. It is possible that by means of the same transportation element two or more variations of tubes and/or tube carriers are transported at the same time, wherein said variations differ in terms or their shapes, for example.

For example, the rotating means can comprise a plate which can be of round and flat shape, i.e., the plate can be formed as a wheel or disc. An outer diameter of the wheel can be e.g. 460 millimeters or different. The wheel is arranged to be rotatable about a vertical axis that vertically intersects a transport plane (which is parallel to the upward-facing surfaces) of the transport elements. On an outer rim of the wheel, it comprises guiding and/or holding means, wherein each of them is configured to guide and/or hold the respective tube carrier as long as it is passes through the turntable. The wheel is therefore a guiding and/or holding wheel.

Said wheel can be rotated about the vertical axis by means of a drive component or actuator of the transportation device or by means of an independent drive component or actuator. In the latter, the drive components can be synchronized with each other. The rotating means can be connected to the respective drive component via a transmission to transmit between different velocities of the transportation elements.

In an operating mode of the turntable (or of a transportation system which comprises one or more turntables) and following an exemplary path of one of the tube carriers of the plurality of tube carriers, said carrier (sole or loaded with a tube) is conveyed by means of the first transportation element in direction to the turntable. There, the turntable, in particular its rotating element, receives the carrier which then is moved rotatably by the rotating element or wheel, respectively, driven by the drive component. At the same time, the tube is guided and/or held by the guiding and/or holding means of the rotating means, i.e., of the guiding and/or holding wheel. The guiding and/or holding wheel is rotated until the tube carrier reaches the second transportation element, where the tube carrier is transferred to the second transportation element. After that, the tube carrier is further moved by means of the second transportation element.

The turntable is a particularly advantageous solution to improve an automated transportation of objects, especially biological and/or chemical samples. Thanks to the turntable, multidirectional intersections where a plurality of transportation elements meet and extremely small curve radii can be set up, which is primarily advantageous for an in-plant transportation where space is limited by infrastructural boundaries. Two or more workstations can be connected to each other using the turntable to connect and/or intersect a plurality of actuated transportation elements. Furthermore, large curve radii of long and expansive common transportation elements are no longer needed. That may lead to smaller power consumption and to simplified manufacturing of in-plant transportation elements. Also, because of the rotational movement of the carrier due to the guiding and/or holding wheel, the movement of a tube filled with a liquid is steady, so the liquid in the tube stays calm, i.e., the liquid is not shaken or mixed or spilled (when an opening of the tube is not sealed).

An embodiment of the first aspect is related to a turntable for moving biological samples,
*comprising:*
- a *base plate configured:*
   - *to connect a plurality of transportation elements in a pre-defined configuration; and*
   -- *to be detachably connected to the rotating* means .

For this purpose, the base plate can comprise one or more notches where two or more transportation element ends are to be arranged, such that the tube carrier by reaching the transportation element end comes in contact with guiding and/or holding wheel, i.e., its outer rim or one of the guiding and/or holding means. Two or more pre-defined configurations, how the two or more transportation element ends can be arranged, can be specified, using respective variations of the base plate. For example, there can be one variation of the base plate which has only one notch the transportation element ends can be arranged in. In a further variation of the base plate, it has two or more notches, wherein at least one of the two or more transportation element ends can be arranged in each of the notches. The two or more notches can be arranged equidistantly along a circumferential direction of the base plate.

In one implementation, the base plate is designed in a way that it is possible to have, e.g., an T-Segment with only one end segment. Then the turntable can be placed onto a straight track segment. This is achieved by attaching, e.g., the wheel motor and the MDB on top of the turntable. At the back area no disturbing parts are located.

Alternatively, the two or more notches can form several redirection and/or intersection shapes for the transportation element ends, such as - only exemplary and not forming a closed list - a 30°-redirection, a 45°-redirection, a 90°-redirection, a 120°-redirection, a 135°-redirection, a T-intersection, a Y-intersection, an X-intersection, a U-turn (i.e., a 180°-redirection) or the like. The different base plate variations can advantageously be used to configure an overall transportation system flexibly, by connecting transportation elements in different ways. For particularly simple assembling as well as for particularly simple adapting of the turntable, the wheel and the base plate can be detachably connected or connectable to each other. For example, the base plate has a bearing by means of which the wheel can be held rotatable on the base plate.

Furthermore, the track segments can be attached and/or positioned with the turntable via one or more sheetmetal brackets. This may also support the modularity of the system elements.

An embodiment of the first aspect is related to a turntable for moving biological samples,
*comprising:*
- *a drive system configured to move the rotating means* ;
- *a clutch configured to decouple the drive system from the rotating means if a pre-defined decoupling-force is exceeded.*

The drive system is configured to propel the rotational movement of the rotating means. The drive component and the rotating means, e.g., the guiding and/or holding wheel, are interconnected by means of the clutch, which, particularly, can be designed as a claw coupling or ratchet coupling. Other possible embodiments of the clutch are, for example, a clutch with a spring pressure piece, a clutch with magnets etc. In the drive system, a drive component, for example, the drive component or actuator of the transportation device or the independent drive component or actuator as mentioned above, and the clutch can be combined to an integrated assembly module of the turntable. Alternatively or additionally, the clutch can be integrated with a transmission, particularly, the transmission mentioned above.

The clutch can comprise a first clutch element fixedly connected to a drive shaft of the drive system or the drive component, respectively, and a second clutch element fixedly connected to the rotating means, for instance, to the guiding and/or holding wheel. In a completely closed or coupled state of the clutch, first and second clutch element are engaged with each other, so a full amount of torque provided by the drive system is used to rotate the guiding and/or holding wheel. In a completely open or decoupled state of the clutch, first and second clutch element can be rotated relative to each other, so that none of the torque provided by the drive system is used to rotate the guiding and/or holding wheel. Optionally, the clutch can further be configured to be operated in a partially opened or partially closed state, wherein it is operated with slip between first and second clutch element. In this case, first and second clutch element are in contact to each other but can be rotated relative to each other, so that the torque provided by the drive system is partially used to rotate the guiding and/or holding wheel. The clutch is operated in the closed/coupled mode, in the open/decoupled mode or in the slip mode, depending on an external wheel braking force applied to the guiding and/or holding wheel.

The clutch can be configured to transmit the torque to rotatably propel the guiding and/or holding wheel until the guiding and/or holding wheel is braked to such an extent that the pre-defined decoupling-force of the clutch is exceeded; the clutch then is decoupled/opened, and the drive system spins without rotating the guiding and/or holding wheel. Further, the clutch can be configured to withstand the force of a fully loaded guiding and/or holding wheel before it reduces the velocity of the wheel by decoupling. By means of the clutch, the drive system may be prevented from becoming damaged, if the rotating means is externally braked or blocked from further rotating in an undesired manner, for instance, due to jammed tubes or tube carriers in the transportation means and/or in the turntable.

Based on one more of these embodiments a safe clutch can be provided that prevents operators from being injured when working with a system with a clutch according to the first aspect of this disclosure.

An embodiment of the first aspect is related to a turntable for moving biological samples,
*wherein the clutch is configured such that the de-coupling ends in case of one or more of the following criteria:*
- *after a pre-defined rotation distance;*
- *at a pre-defined re-coupling point;*
- *if a force between the rotation means and the drive system, after de-coupling, falls below a pre-defined threshold, in particular below the de-coupling force.*

It is to be understood that "to end the decoupling" means that at least an attempt is made to recouple the clutch after its first and second clutch element were decoupled from each other as described above. As long as the force between the rotation means and the drive system, after decoupling, remains over the pre-defined threshold, in particular over the decoupling force, an attempt to recouple first and second clutch element or ending the decoupling of the clutch may not be realized. Decoupling ends, for example, if first clutch element or the shaft connecting first clutch element and the drive component was rotated by a pre-defined rotation distance relative to second clutch element or to the braked or blocked guiding and/or holding wheel. Further, decoupling ends, if first clutch element or the shaft connecting first clutch element and the drive component was rotated until, at the coupling point of the clutch, first and second clutch element of the clutch engage with each other again. For example, the clutch elements can comprise one coupling point or two or more coupling points, so that the clutch elements can recouple in several relative positions.

When it comes, for example, to the case that a carrier is blocked, the guiding and/or holding wheel will no longer exert force to the carrier due to the clutch being decoupled, whereby the clamping of the carrier is not increased by the guiding and/or holding wheel. This supports the chance that the clamped carrier can be released easily, e.g., in case of a cleared downstream carrier jam. If so, first and second clutch elements automatically re-engage with each other by reaching the coupling point or one of the coupling points, respectively. There can be multiple coupling points, exemplarily, four coupling points (spaced apart by 90°), eight coupling points (spaced apart by 45°), 12 coupling points (spaced apart by 30°), 16 coupling points (spaced apart by 22.5°) and so on. Because of the automatic recoupling mechanism of the clutch, it is advantageously not necessary to recouple the clutch elements by hand.

An embodiment of the first aspect is related to a turntable for moving biological samples,
*configured to:*
- *receive a plurality of carriers from a transportation element with a plurality of lanes, each sequentially providing carriers towards the device; and*/*or*
- *relieve a plurality of carriers to a transportation element with a plurality of lanes, each sequentially transferring carriers away from the device.*

One or more of the first and the second transportation elements can comprise one lane or two or more lanes, wherein each lane moves the tube carriers, thereby the tube carriers transported on a common lane particularly form a queue. So, first lanes of one of the first transportation elements are delivering lanes, and by means of said first/delivering lanes tube carriers are delivered to the turntable. On the other hand, second lanes of the second transportation elements are removing lanes, and by means of said second/removing lanes tube carriers are removed from the turntable. The lanes can comprise different functions such as fast lanes, slow lanes, soft handling lanes for open tubes etc. The turntable, particularly its rotating element, is configured to sequentially receive the tube carriers delivered by one or more first lanes and to sequentially divert the received tube carriers to one of the second lanes. Then, the respective second lane sequentially removes, i.e., carries away, the diverted tube carriers. This can be advantageous as a higher throughput and/or different transport lane functions can be achieved.

An embodiment of the first aspect is related to a turntable for moving biological samples,
*comprising:*
- *a plurality of recesses* , *wherein each recess is configured to host a carrier while the device rotates.*

That means, the guiding and/or holding means of the rotating means or of the guiding and/or holding wheel, respectively, can comprise or be the plurality of recesses. The rotating means can therefore be regarded as a recess wheel. Especially, a hollow cross-section area of the respective recess and a cross-section area of the respective tube carrier correspond to each other, so that the tube carriers individually fit in the recesses positively-locking. In other words: an inner circumference surface of the recess and an outer circumference surface of the respective tube carrier are in touch with each other adjacently. The recess wheel is of particularly simple construction, if it only comprises said recesses but no additional guiding and/or holding means. In this case, the base plate may comprise a guiding ring (static) disposed on the outer circumference surface of the recess wheel, so that the recess wheel is encircled by the guiding ring. Guiding ring prevents the tube carrier in the recess from leaving the recess radially outwards.

By delivering the tube carriers in direction to the turntable, the tube carriers are moved radially into one of the recesses of the recess wheel, that means to a center of the respective recess. The recesses can have a polygonal form or be of circular shape. In particular, the recesses have a geometry that allows the tube carriers to be radially inserted in the respective recess completely. The tube carrier hosted in the recess can share the tangent of an outer circumference of the recess wheel. Therefore, an inner diameter of the recesses of the recess wheel and an outer diameter of the tube carriers can be the same.

Because of the recesses, multiple tubes/carriers can be diverted safely between first and second transportation elements or between different lanes of a single transportation element by means of the turntable.

An embodiment of the first aspect is related to a turntable for moving biological samples,
*configured to:*
- *provide a controlled entry and*/*or exit of a carrier from a transportation element into the turntable, in particular by a passive-mechanically controlled and*/*or an actively controlled mechanism.*

For example, the turntable comprises a gate mechanism having a first/entry gate element (disposed in an entry area of the turntable, where tube carriers enter the turntable) or two or more first gate elements and a second/exit gate element (disposed in an exit area of the turntable, where tube carriers exit the turntable) or two or more second gate elements. Particularly, the gate mechanism may comprise as many first gate elements as there are first transportation elements or first lanes, respectively, leading into the turntable. Further, the gate mechanism may comprise as many second gate elements as there are second transportation elements or second lanes, respectively, running away from the turntable. Additionally or alternatively, the gate mechanism can comprise a first gate element configured to simultaneously control the entry of tube carriers delivered by two or more first lanes or transportation elements and/or a second gate element configured to simultaneously control the exit of tube carriers to be dispatched by two or more second lanes or transportation elements. The gate mechanism its first and second gate element(s), respectively, can be passive-mechanically controllable or actively controllable.

The respective first gate element is selectively adjustable between an entry position and an entry-blocking position, wherein the respective second gate element is selectively adjustable between an exit position and an exit-blocking position. In its entry-blocking position, the first gate element may protrude into the transport path of the first transportation element or lane, whereby a tube carrier moved to the turntable abuts against the gate element and therefore cannot pass it. Thus, a tube carrier delivered to the turntable can be prevented from hitting the outer circumference of the rotating means or the recess wheel, respectively. Instead, the delivered tube carrier is stopped by the first gate element being in its entry-blocking position.

In its exit-blocking position, the second gate element protrudes into the transport path of the second transportation element or lane, whereby a tube carrier may be moved by the rotating means of the turntable slides along the second gate element and therefore cannot be dispatched to the second transportation element or lane. Thus, a tube carrier that is about to exit the turntable can be held in/on the rotating means and/or can be placed on one specific of the second transportation elements or lanes.

The gate mechanism configured to provide a controlled entry of a tube carrier from a first transportation element or lane into the turntable and/or a controlled exit of a tube carrier out of the turntable to/on a second transportation element or lane can be passive-mechanically controllable, i.e., the adjusting of the respective gate element can be mechanically coupled and/or synchronized with the rotational movement of the rotating means. Alternatively, said mechanism can be actively controllable, i.e., the mechanism can comprise a gate element actuator which is configured to adjust the respective gate element independently of the rotational movement of the rotating means. The adjustment of the mechanism, particularly its gates, can therefore be controlled electronically and/or by a software process. Advantageously, the mechanism is controlled in a way that a tube carrier only comes in direct contact with the rotating means of the turntable when one or more of the guiding and/or holding means is free to receive a tube carrier. As a result, jamming of tube carriers due to improper reception by the rotating means can be prevented.

Additionally or alternatively, for controlled exit of the tube carriers, the turntable, particularly the aforementioned (gate) mechanism, may comprise static exit elements, each adapted to one of different variations of tubes or tube carriers which differ in terms of their shape. The static exit element can form a simple sorting system by means of which the different tube variations or different tube carrier variations are only allowed to exit on a specific one of the second lanes or transportation elements, namely on the lane or transportation element the static exit element is allocated to. For example, the static exit element can be a static ring encircling the rotating means. This may enable a predefined exit of the tube carriers, in particular in case of multiple possible exit points of the turntable.

Optionally , each of the recesses of the recess wheel can have a bow spring element running and/or forming an edge of each recess. As a tube carrier exits the recess, the bow spring element is tensioned by the tube carrier until it has left the recess completely. In such a situation, the tensioned bow spring element drives the tube carrier further out of the recess, thereby preventing the rotating recess wheel to become stuck by tube carrier clamped between the recess and another element of the turntable or transportation system.

An embodiment of the first aspect is related to a turntable for moving biological samples,
*comprising a mechanical stopper mounted on a static part of the turntable, in particular on the base plate, such that the stopper controls an entry and an exit by being moved by the rotating means of the turntable.*

Exemplarily, the stopper can be formed by one of the first/entry gate elements which then is movably mounted on the static part of the turntable or the base plate, respectively. Then, said first gate element, i.e., the stopper, can comprise an actuation element which is mechanically operable by the rotating means, particularly by the recess wheel. The stopper, which may be formed as a rod, is biased to a closed position, for example, by means of a spring. The stopper in its closed position protrudes into the transport path of the first transportation element or lane, whereby a tube carrier moved to the turntable abuts against the stopper and therefore cannot pass it. By means of the rotating recess wheel the stopper is adjusted in its opened position, because the stopper is arranged relative to the recess wheel in a way that an edge of recess abuts the actuation element of the stopper, thereby moving the stopper. The recess wheel and/or the stopper, particularly its actuation element, can be configured in a way that the stopper clears the transport path only when one recess is aligned with the respective transport path. Is the stopper in its opened position the transport path is cleared, whereby a tube carrier moved to the turntable passes the stopper and enters one of the recesses of the recess wheel safely. One recognizes, that entering of the tube carrier into the turntable is prevented as long as no recess is aligned with the respective transport path. Due to this, clamping a tube carrier between the recess wheel and a fixed element of the turntable or the transportation elements can be avoided. Additionally, a cost efficient implementation of a means for controlling an entry of the tube carriers is provided. The turntable can comprise two or more stoppers which can be arranged on different transportation elements or lanes.

An entry element can be a part of a turntable and/or an individual part that can be attached to a turntable and/or to any other structure of a transport system for carriers/tubes. An entry element can comprise different parts, e.g.:
- a access element, configured to mechanically block an entry or to allow an entry of a carrier into a recess of a turntable; and
- a control element, configured to control the entry element such that it can block or not-block an entry of a carrier into a turntable.

The control element can be configured to electronically control the entry element, and/or to mechanically control the entry element. A mechanical control element can be configured such that an entry of a carrier in a turntable is blocked based on a mechanical interaction with a carrier that is already transported in a turntable (e.g. which occupies a recess of a turntable). Additionally or alternatively, a mechanical control element can be configured such that an entry of a carrier in a turntable is blocked based on a mechanical interaction with a protruding element of the turntable that is served by the entry element.

An embodiment of the first aspect is related to a turntable for moving biological samples,
*configured to:*
- *detect that a carriers is stuck at the rotating* means ; *and*
- *perform a backward motion such that the stuck carriers can move into a recess of the rotation wheel.*

For instance, the turntable can comprise detecting means by means of which a stuck tube carrier is detectable. If a stuck tube carrier blocking the rotating means is detected, the turntable (i.e., its drive component) is controlled to perform the backward or reverse motion. The backward or reverse motion can be conducted by the rotating means, for example by the recess wheel. When a normal rotation direction of the rotating means is clockwise, then the rotation direction of the backwards or reversely rotating recess wheel is counterclockwise, or vice versa. Simultaneously with the backward motion of the rotating means, the conveying means of the transportation elements can also be controlled to perform a reverse movement. Alternatively, during the backward motion of the rotating means, the conveying means can be controlled in a way that they continue to convey in the normal (forward) direction.

The reverse motion may be only a few degrees, e.g. <1°, <3°, <5°, <10°, and/or <20°, which will suffice - at least in most use cases - to release the stuck tube carrier quickly and let the carrier slide into the recess. Additionally, the clutch can be designed in a way, that by recoupling the clutch elements the recess wheel is pulled about a short distance inversely, e.g. by means of a magnet arrangement and/or a ball shaped pressure peace, before the clutch elements snap in and engage each other again.

An embodiment of the first aspect is related to a turntable for moving biological samples,
*configured to:*
- *actively attach and*/*or release a carrier to the turntable during rotation, in particular:*
   -- *mechanically,*
   -- *electrically, and*/*or*
   --*magnetically.*

Alternatively or additionally to the recesses, the guiding and/or holding wheel can comprise mechanical and/or electrical and/or magnetic guiding and/or holding means. Therefore, the tube carriers can be actively attached and/or released to the turntable or its guiding and/or holding wheel, respectively. The guiding and/or holding wheel can comprise two or more guiding and/or holding means, for example, a tube carrier can be mechanically and/or electrically and/or magnetically secured in a recess. Said mechanical and/or electrical and/or magnetic guiding and/or holding means may be actively controllable, so that a releasing of the tube carrier, hence, to which of the transportation elements or lanes the tube carrier is moved by the guiding and/or holding wheel, can be timed as desired. Especially, the control of when the tube carrier is to be released or separated from the guiding and/or holding wheel can be carrier-selective. So, the flexibility of handling the tube carriers by means of the turntable is increased advantageously.

An embodiment of the first aspect is related to a turntable for moving biological samples,
*configured to:*
- *receive carriers from and relieve carriers to the same transportation element.*

In doing so, the tube carrier conducts a U-turn. In particular, the guiding and/or holding wheel and/or the base plate can be configured such that a transportation orientation of the tube carrier conducting the U-turn is changed. For example, the tube carrier can be rotated about its vertical axis. It is to be understood that the tube carrier received from one of the lanes and conducting the U-turn can be dispatched to another lane. U-turning the tube carriers can be used to send tube carriers back to where they came from, e.g., in order to sort out corrupt tube carriers, redo a failed process in an upstream workstation etc.

An embodiment of the first aspect is related to a turntable for moving biological samples,
*configured to:*
- *receive carriers from a first transport element, which has a first proximal lane for transporting carriers in a first direction and a first distal lane for transporting carriers in a second direction, which is opposite to the first direction*;
- *release carriers to a second transport element, which has a first proximal lane for transporting carriers in the second direction and a first distal lane for transporting carriers in the first direction;*
*such that the carriers travel on both transport elements in the same direction.*

A proximal lane of a transportation element may be proximal relative to a reference point, e.g. a wall or one or more functions of a tube transportation system. A proximal lane may be proximal to a storage facility and/or one or more analyzers, such that a tube transported on the proximal lane can be transferred to the storage facility and/or to one of the analyzers. In this context, a distal lane of a transport element located next to the proximal lane and further away from the respective reference point. In particular, a tube cannot directly be transferred a storage facility and/or an analyzer from a distal lane but needs to be transferred to a proximal lane therefor. A proximal lane may further be configured to transport tubes/carriers in a direction which is opposite to a direction of a distal lane of the same transportation element.

A transportation element may have a distal lane that transports tubes in the same direction as a proximal lane of another transportation element. This may be needed in case a tube may have to be processed e.g. by an analyzer on a proximal lane. Therefore, a turntable can be configured to transfer tubes from a distal lane of a first transport element to a proximal lane of a second transportation element, wherein both lanes transport the tube in the same direction. Additionally or alternatively, the turntable may also be configured to transport a tube from a proximal lane of a first transportation element to a distal lane of a second transportation element, wherein also in this case both lanes transport the tube in the same direction. Additionally to one or both of these functions, the turntable can be configured for a U-turn, i.e. for transferring a tube from a distal lane to a proximal lane of the same transportation element (or vice versa). A turntable can be configured to perform all of these functions to different tubes/carriers during the same operation, e.g. by a software- or hardware-based controller.

A second aspect of the present disclosure is related to a transportation system with one or more turntables for transporting (carriers and/or tubes for) biological samples,
*comprising:*
   - *at least two transportation elements* ;
   - *at least one turntable according to one of the preceding aspects;*
*configured to:*
   - *transfer a plurality of sample carriers from a first of the transportation elements over the turntable to a second of the transportation elements.*

Features of the transportation system are already described in the above description of the turntable. Those features are to be considered as own features of the transportation system. Insofar as features of the turntable are described in the following description of the transportation system, those features are to be considered as own features of the turntable.

The transportation system can comprise a plurality of transportation elements connected to a plurality of turntables in different configurations. That means, the transportation system can have several redirections and/or intersections, as well as transportation elements/lanes of different lengths and/or conveying directions. It is particularly flexible to set up. Generally, at each of the redirections and/or intersections, the transportation system is configured to transfer a carrier of a plurality of carriers from a first of the transportation elements to a second of the transportation elements by means of the turntable.

The conveying means of the transportation elements can be motorized, whereby it is particularly envisaged that transportation elements are motorized segment-wise. This leads to the possibility to create a particularly large transportation system with compact motors to drive the conveying means and, therefore, to a small power consumption locally at each motor.

An embodiment of the second aspect is related to a transportation system with one or more turntables for transporting (carriers and/or tubes for) biological samples,
*comprising a turntable that transfers carriers to three or more transportation elements.*

That means, the guiding and/or holding wheel receives or picks up tube carriers from one of the first transportation elements and distributes the tube carriers to three or more of the first and second transportation elements. Optionally, the transport of the tube carriers can be vice versa: while the guiding and/or holding wheel moves tube carriers to one of the second transportation elements it can simultaneously receive tube carriers from the second transportation element and move them to the first or any other connected transportation element. So, the transportation system can be a redundant system with a particularly low failure rate.

An embodiment of the second aspect is related to a transportation system with one or more turntables for transporting (carriers and/or tubes for) biological samples,
*comprising:*
- *an entry element configured to control an entry of a carrier from a transportation element to the turntable; and*/*or*
- *an exit element configured to control an exit of a carrier from the turntable to a transportation element.*

For example, the transportation system comprises the gate mechanism as described above, wherein the entry element configured to control the entry of the carrier from a transportation element to the turntable is formed/represented by a first/entry gate element of the gate mechanism, and the exit element configured to control the exit of the carrier from the turntable to a transportation element is formed/represented by a second/exit gate element of the gate mechanism. The exit element and the entry element are access elements, also the gate elements can be considered as access elements. Each access element can be dependent on turntable parameters like conveying velocity, recess form, tube carrier congestion, occupation of turntable with tube carriers or tubes from other transport elements etc. By means of the respective access element, the tubes or tube carriers are prevented from hitting the outer circumference edge or surface of the guiding and/or holding wheel. Further, an edge of a recess of the recess wheel does not hit the tube when being provided, therefore, tube carrier jam is avoided. Additionally and as not mentioned here, technical effects and advantages presented in the description of the gate mechanism apply analogously.

An entry element and/or an exit element can be mounted on a turntable and/or on a transportation element of a transportation system.

An embodiment of the second aspect is related to a transportation system with one or more turntables for transporting (carriers and/or tubes for) biological samples,
*comprising at least one entry element with:*
- *a carrier stopping means* ;
- *a control means configured to control the carrier stopping means such that it blocks or allows an entry of a carrier into a turntable*.

A carrier stopping means can be, e.g., a wheel with recesses and/or blocking protrusions for a plurality of carriers, such that carriers can enter a turntable if the wheel rotates and such that the wheel blocks entry of carriers if it does not rotate.

A control means can either be an electronic (hardware-based and/or software-based) component. Additionally or alternatively, a control means can be a mechanical component. The control means can be configured to be at least in two different modes. In a first mode, the control means controls the stopping means such that no carriers can enter the turntable. In a second mode, the control means controls the stopping means such that one or more carriers can enter the turntable. The control means can switch between both modes. In case of a mechanical control means, the control means can be configured to block and/or unblock the carrier stopping means mechanically.

A two-part entry element may provide a flexible and effective way to control entry of carriers into a turntable.

Additionally or alternatively, the two-part entry element may be configured such that carriers can enter a turntable only in a pre-defined way, e.g. by contacting the turntable on a protruding element at first and then slipping into a recess. This avoids jams in case a plurality of carriers is to be moved by the turntable.

An embodiment of the second aspect is related to a transportation system with one or more turntables for transporting (carriers and/or tubes for) biological samples,
*wherein the control means is configured to block or un-block the carrier stopping means* , *in particular based on a mechanical interaction with a carrier and*/*or a protruding element of the turntable*.

For example, a control means can be formed as a lever that is configured to block a carrier stopping wheel by mechanically stopping the wheel from turning. This blocking mode can be initiated by a carrier which occupies the turning wheel, in particular on a position which could otherwise be used for the carrier that is blocked. A mechanical entry element may be an energy-saving, effective solution for controlling carriers of moving into a turntable.

An embodiment of the second aspect is related to a transportation system with one or more turntables for transporting (carriers and/or tubes for) biological samples,
*comprising:*
   - *at least one turntable ; and* - *at least three transportation elements ; wherein at least one turntable and two transportation elements form a path for a carrier when moved by the system;*
*configured to:*
   - *provide at least two pre-defined paths for carriers, which in particular comprise a same turntable.*

In such a configuration of the transportation system, the tube carriers can be delivered by one of the transportation elements connected to the turntable, wherein the tube carriers are dispatched or distributed selectively to one or both of the other transportation elements connected to the turntable. The selective dispatching of the tube carriers can be conducted by means of an access element and/or a stopper and/or the mechanical and/or electrical and/or magnetic guiding and/or holding means, as described above.

As a result of this embodiment, different types of tubes, tube carriers or samples can be processed parallelly. For instance, one transportation process can move a first type of tube, tube carrier or sample along a first transport path to a first workstation, e.g., an analyzer, whereby simultaneously another transportation process can move a second type of tube, tube carrier or sample along a second transport path to a second workstation, e.g., a freezer. Redundant transport paths are also possible. Additionally alternatively, an empty carrier can be provided to a storage facility or to an analyzer to receive a tube being released from an analyzer.

An embodiment of the second aspect is related to a transportation system with one or more turntables for transporting (carriers and/or tubes for) biological samples,
*comprising:*
   - *a first transportation element that has at least two lanes:*
      - a *first proximal lane* , *configured to transport carriers in a first direction;*
      - a *first distal lane* , *configured to transport carriers in a second direction opposite to the first direction;*
   - *a second transportation element that has at least two lanes:*
      - *a first proximal lane, configured to transport carriers in the second direction;*
      - *a first distal lane, configured to transport carriers in a first direction;*
*and wherein the turntable is configured to transfer a carrier from the distal lane of the first transportation element to the proximal lane of the second transportation element and*/*or vice versa.*

A transfer of a tube/carrier from a distal lane of a first transportation element to a proximal lane of a second transpiration element, wherein the tube is transported in the same direction on both lanes, can facilitate a processing of the tube, in particular, when processing (or storage) facilities are located such that they can be accessed from the proximal lane only or at least in an advantageous way. Additionally or alternatively, a tube/carrier can be transferred from a proximal lane to a distal lane.

A transportation system with one or more transportation elements with distal lanes and one or more transportation elements with proximal lanes, wherein all lanes are moving a tube/carrier in a same direction may enable a flexible configuration of the system, such that functions can be accessed on either of the lane types (proximal, distal). This may shorten the path length a single tube has to travel to be processed by a plurality of mandatory functions (e.g. different types of analyzers). Since the path length is shortened, a travel time may be reduced as well, which may finally enable a higher throughput of the transportation system.

An embodiment of the second aspect is related to a transportation system with one or more turntables for transporting (carriers and/or tubes for) biological samples,
*comprising:*
- *one or more analyzers configured to receive and release tubes to a carrier, each, on a proximal side of a transportation element; and*
- *a first crossover element, in particular a second turntable, configured to move empty carriers after they passed the analyzers to a distal lane of the transportation element, in which the carriers are moved backwards along the analyzers again and*/*or moved to a buffer region;*
- *a second crossover element, in particular a third turntable, configured to move empty carriers after they passed the analyzers on the distal lane to the proximal lane such that they are in a position to receive a tube, each, from one of the analyzers.*

In other words, in this configuration of the transportation system, the analyzers are, for example, integrated in the proximal track or lane of the transportation element (or at least easiest accessible from a proximal lane). Tube/carriers can pass through the first analyzer and/or subsequently through the second analyzer. By means of a first crossover element, particularly by said second turntable, empty tube carriers released from an analyzer are diverted to the distal track or lane of the transportation element. On the distal track, the empty tube carriers are moved back in the direction of the (first/second) analyzer, i.e., reversely to the proximal track or lane.

Optionally, a buffer region can be fed with empty tube carriers via distal track, especially by means of a further turntable and/or transportation element. After the empty tube carriers passed by the (first/second) analyzer on the distal track, they are diverted to the proximal track by means of second crossover element, particularly by said third turntable. Now, the empty tube carriers on the proximal track can be fed to first analyzer. Hence, empty tube carriers are kept in the region of the analyzers and can be provided quickly if an analyzer needs an empty carrier to release a tube.

A further aspect of the present disclosure is related to a computing device comprising a processor configured to carry out a method to operate one or more functions of the preceding aspects/embodiments.

A further process of the present disclosure is related to a computer program product comprising instructions which, when the program is executed by a computer system, cause the computer system to carry out the method according to the preceding aspect.

A further aspect of the present disclosure is related to a computer-readable medium comprising instructions which, when executed by a computer system, cause the computer system to carry out the method according to the preceding aspects.

### Brief description of the figures

Further advantages and features result from the following embodiments, some of which refer to the figures. The figures do not always show the embodiments to scale. The dimensions of the various features may be enlarged or reduced, in particular for clarity of description. For this purpose the figures are at least partially schematized.
Fig. 1 shows a schematic view of an embodiment of a transportation system having a turntable.
Fig. 2 shows a schematic view of the transportation system, wherein a rotating means of the turntable is not shown.
Fig. 3 shows a schematic view of the transportation system, wherein two transportation elements are connected to a redirection by means of the turntable.
Fig. 4 shows a schematic view of parts of the turntable.
Fig. 5 shows a schematic view of the base plate having a modular structure.
Fig. 6 shows a schematic view of the guiding and/or holding wheel having recesses and a bow spring element.
Fig. 7 shows a schematic view of the turntable having a gate mechanism having at least one gate element.
Fig. 8 shows a schematic view of exemplary embodiments of the gate element.
Fig. 9 shows a schematic view of the turntable having entry control mechanisms.
Fig. 10 shows a schematic view of a barrier element of a further embodiment of a gate element of the gate mechanism.
Fig. 11 shows a schematic view of a section of the transportation system, wherein the gate mechanism blocks a tube carrier from leaving the turntable.
Fig. 12 shows a schematic view of the section shown in Fig. 11, wherein the gate mechanism allows a tube carrier to leave the turntable.
Fig. 13 shows a schematic view of the turntable comprising a clutch.
Fig. 14 shows a schematic view of clutch elements of the clutch shown in Fig. 13.
Fig. 15 shows a schematic view of the turntable comprising another embodiment of the clutch.
Fig. 16 shows a schematic view of clutch elements of the clutch shown in Fig. 15.
Fig. 17 shows a system for moving biological samples.
Fig. 18 shows a system for moving biological samples.
Fig. 19 shows a turntable configured to be used for the system according to Fig. 18.
Fig. 20 shows a system for moving biological samples.
Fig. 21 shows a system for moving biological samples with a mechanical entry element and in different states of a blocking/entry procedure.

In the following description reference is made to the accompanying figures which form part of the disclosure, and which illustrate specific aspects in which the present disclosure can be understood. Identical reference signs refer to identical or at least functionally or structurally similar features.

In general, a disclosure of a described method also applies to a corresponding device (or apparatus) for carrying out the method or a corresponding system comprising one or more devices and vice versa. For example, if a specific method step is described, a corresponding device may include a feature to perform the described method step, even if that feature is not explicitly described or represented in the figure. On the other hand, if, for example, a specific device is described on the basis of functional units, a corresponding method may include one or more steps to perform the described functionality, even if such steps are not explicitly described or represented in the figures. Similarly, a system can be provided with corresponding device features or with features to perform a particular method step. The features of the various exemplary aspects and embodiments described above or below may be combined unless expressly stated otherwise.

### Detailed description

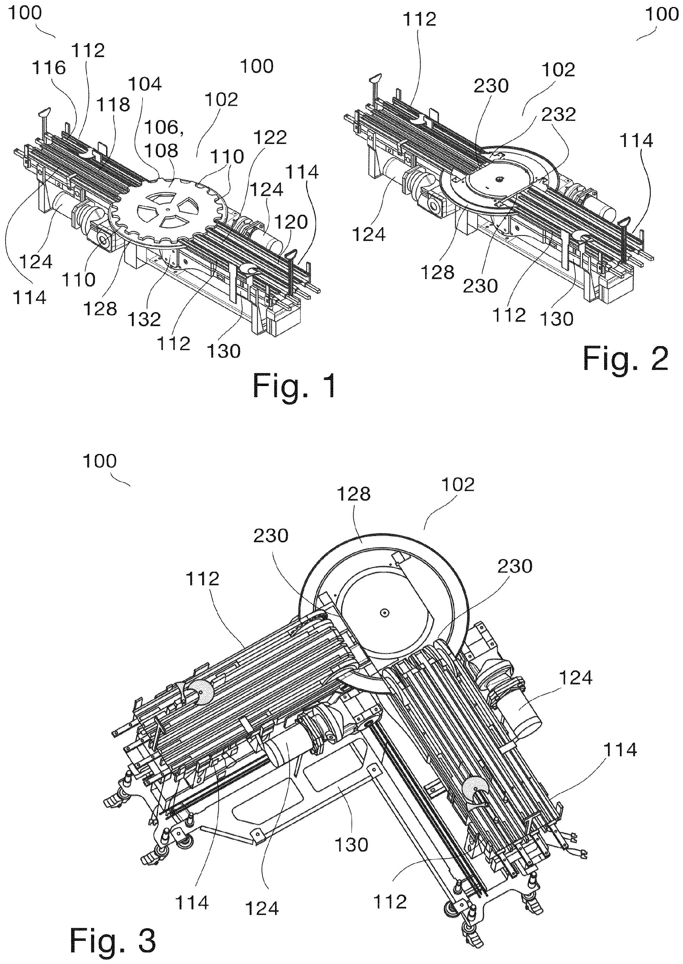

Fig. 1 shows a schematic view of an embodiment of a transportation system 100 having a turntable 102. Turntable 102 comprises a rotating means 104 which, for example, is a guiding and/or holding wheel 106, particularly embodied as a recess wheel 108 having a plurality of recesses 110 arranged along an outer circumference of the recess wheel 108. Also, transportation system 100 comprises at least one first transportation element 112 and at least one second transport element 114. First transportation element 112 can have two or more first transportation lanes 116, 118, wherein second transportation element 114 can have two or more second transportation lanes 120, 122. Transportation lane 116, 118, 120, 122 can also be referred to as respective transportation track. Transportation elements 112, 114 or the associated transportation lane 116, 118, 120, 122, respectively, comprise a conveying means (not shown), for example, a chain conveyor, and the conveying means can be motorized (by conveyor motors 124). Transportation system 100 can have two or more first transportation elements 112 and/or two or more second transportation elements 114. It can be seen, that one or more of the conveying means of first transportation element 112 and one or more of the conveying means of second transportation element 114 can be driven by means of one of the conveyor motors 124. Thereby, the conveying means of first transportation lanes 116, 118 can be driven in a first direction, and the conveying means of second transportation lanes 120, 122 can be driven in a second direction, which is the opposite direction of the first direction.

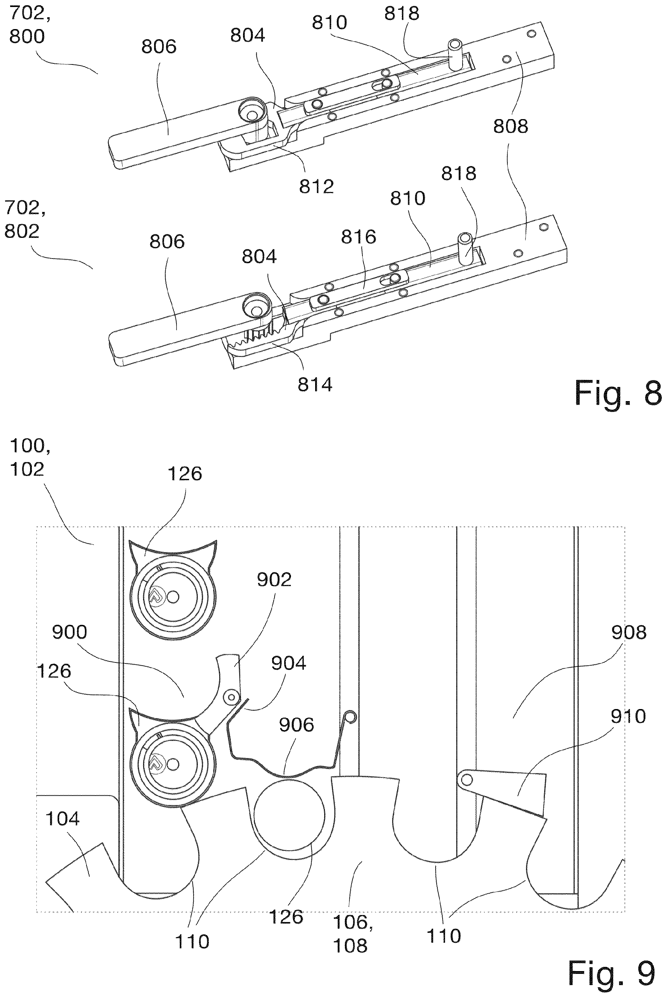

Transportation system 100 is configured to transfer a plurality of sample carriers, herein referred to as tube carriers 126, (see Fig. 9) from one of the first transportation elements 112 by means of the turntable 102 to one of the second transportation elements 114. The turntable 102, particularly its rotating means 104, also can be motorized, for example, rotating means 104 can be coupled to one of the conveyor motors 124. By means of the respective first transportation element 112 the tube carriers 126 can be delivered to (i.e., moved to and given to) the turntable 102, and by means of the respective second transportation element 114 the tube carriers 126 can be dispatched (i.e., took over and moved away) from the turntable 102. Therefore, the rotating means 104 is rotatably attached to a base plate 128 of the turntable 102. To stabilize the base plate 128 on a carrier rack 130 of the turntable 102, it rests on a pair of base plate supports 132 mounted to the carrier rack 130.

Fig. 2 shows a schematic view of the transportation system 100, wherein the rotating means 104 of the turntable 102 is not shown so that more of the base plate 128 is visible. It can be seen in Fig. 2 that the base plate 128 comprises notches 230, and the transportation elements 112, 114 protrude into the base plate 128 by protruding in its notches 230. So, transportation elements 112, 114 or transportation lanes 116, 118, 120, 122, respectively, terminate on their proximal ends inside an outer circumference of the base plate 128. To aid a transfer of the tube carriers 126 from a first transportation element 112 or lane 116, 118 to the turntable 102 it can comprise transfer guiding plates 232 attached to base plate 128.

In Fig. 1 and Fig. 2 a possible configuration of the turntable 102 or the transportation system 100, respectively, is shown, wherein the transportation elements 112, 114 are connected in straight line by the turntable 102. In this configuration, transportation system 100 or turntable 102, respectively, can be used to change a transport orientation of the tube carriers 126.

Fig. 3 shows a schematic view of an embodiment of the transportation system 100, wherein the transportation elements 112, 114 are connected by turntable 102 at an angle other than 180°, for example at 90°. In this configuration, turntable 102 forms a redirection for the tube carriers 126 conveyed by the transportation system 100.

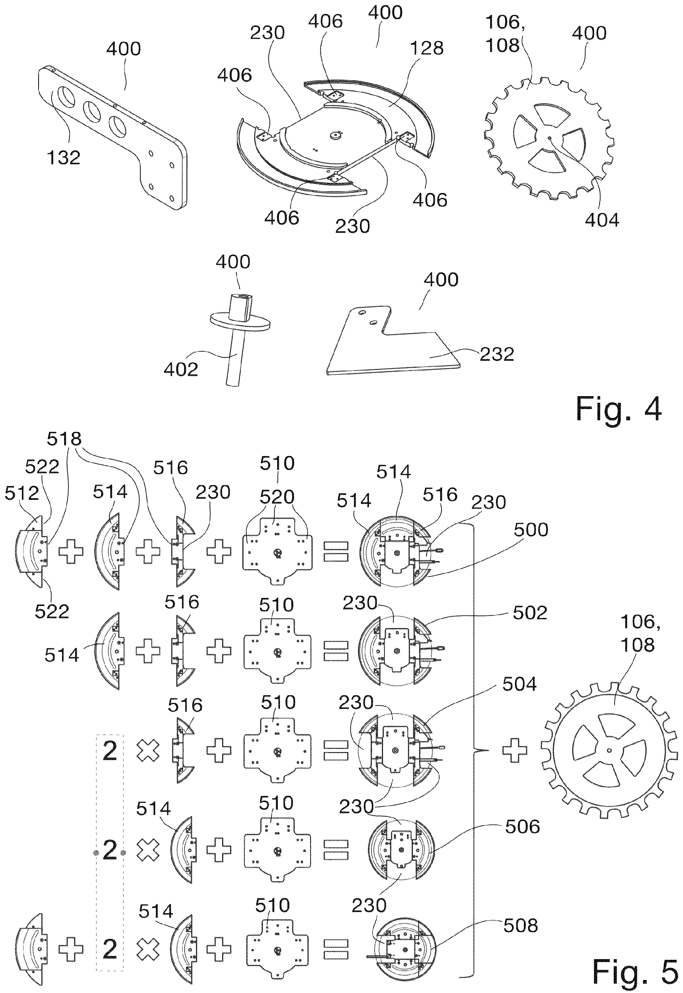

Fig. 4 shows a schematic view of parts of the turntable 102, particularly, one possible embodiment of the base plate 128, the guiding and/or holding wheel 106 in form of recess wheel 108 and a drive shaft 402 a central hub 404 of the guiding and/or holding wheel 106 is connectable to. To build two or more variations or configurations of the turntable 102 and, hence, of the transportation system 100, there can be two or more variations of the base plate 128. The base plate 128 can be a monolithic part. Furthermore, the transfer guiding plate 232 and the base plate support 132 are depicted in greater detail. Base plate 128 can have accommodation recesses 406, the transfer guiding plates 232 fit in positively-locking.

Fig. 5 shows a schematic view of another embodiment of base plate 128 having a modular structure, to build two or more variations 500, 502. 504, 506, 508 of base plate 128. Base plate variations 500, 502, 504, 506, 508 can be built using a module kit having adapter plates 510, which is a non-variant part of the module kit. Further, the module kit can comprise multiple variations of disk segments 512, 514, 516, wherein each of the disk segment variations 512, 514, 516 does have a uniform (non-variant) fastening segment 518 suitable to be fastened to corresponding fastening sections 520 (non-variant) of the adapter plates 510. For example, the first disk segment variation 512 is a notchless or notch closing disk segment, wherein the second disk segment variation 514 has two notch edges 522 of two separate notches 230, whereas the third disk segment variation 516 carries one complete notch 230. By fastening different combinations of disk segment variations 512, 514, 516 to adapter plate 510, the different base plate variations 500, 502, 504, 506, 508 can be made. Combining the respective base plate variation 500, 502, 504, 506, 508 with the rotating means 104 (in Fig. 5 pictured as the guiding and/or holding wheel 106, especially as the recess wheel 108), different configurations/variations of the turntable 102 or the transportation system 100 can be set up.

For example, base plate variation 500 (having one first disk segment variation 512, one second disk segment variation 514 and one third disk segment variation 516 attached to the adapter plate 510) leads to a turntable 102 having two notches 230 that are orientated to each other at 90°. The turntable 102, having plate variation 500 can, for example, be used as a redirection in transportation system 100. Base plate variation 502 (having one second disk segment variation 514 and one third disk segment variation 516 attached to the adapter plate 510) leads to a turntable 102 having three notches 230. The turntable 102, having base plate variation 502 can, e.g., be used as a T-intersection in transportation system 100. Base plate variation 504 (having two third disk segment variations 516 attached to the adapter plate 510) leads to a turntable 102 having four notches 230 that are orientated to each other at 90°, so that the turntable 102 having base plate variation 504 can be used in the transportation system 100 as an X-intersection. Base plate variation 506 (having two second disk segment variations 514 attached to the adapter plate 510) leads to a turntable 102 having two notches 230 orientated to each other at 180° (cf. Fig. 1 and Fig. 2). The turntable 102, having base plate variation 506 can, e.g., be used as a transport orientation means for carrier tubes 126 in transportation system 100. Base plate variation 508 (having one first disk segment variation 512 and two one second disk segment variations 514 attached to the adapter plate 510) leads to a turntable 102 having one notch 230. The turntable 102, having base plate variation 508 can, e.g., be used as a U-turn for tube carriers 126 in transportation system 100.

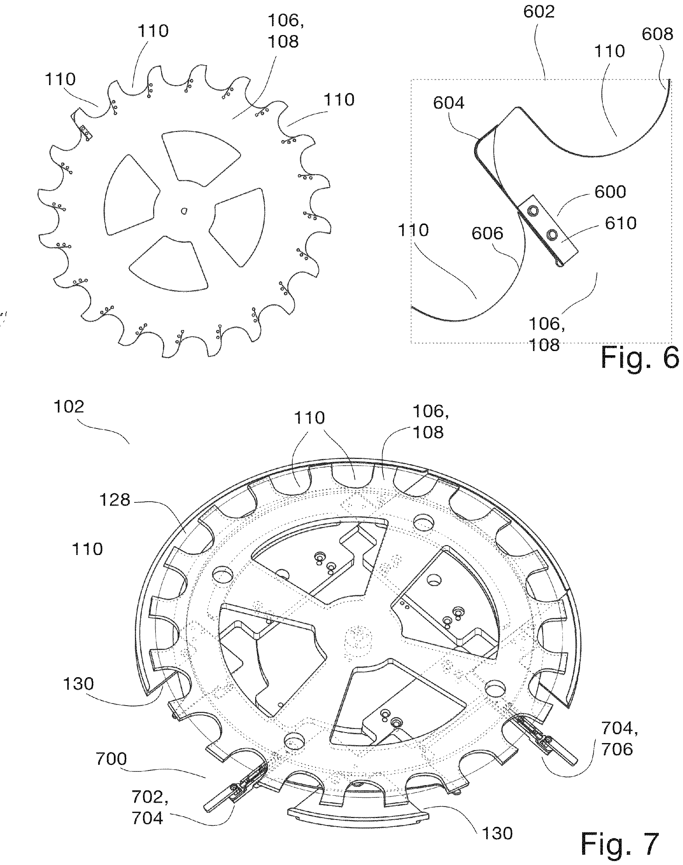

Fig. 6 shows a schematic view of recess wheel 108 having a plurality of bow spring elements 600, an incarnation of which is depicted magnified in area 602 of the figure. Only one of the bow spring elements 600 is shown. As one can see, the bow spring element 600 comprises a bent bow spring 604, which defines one of the recess edges 606, 608 of the recess 110 the bow spring element 600 is allocated to. The bow spring 604 can be attached to the recess wheel 108 and held in place by an attachment body 610 of the bow spring element 600. Bow spring element 600 is configured to aid a controlled exit of a tube carrier 126 out of the turntable 102 to/on a second transportation element 114 or lane 118, 120.

Fig. 7 shows a schematic view of turntable 102 having a gate mechanism 700, for example, mounted to the base plate 128. Gate mechanism 700 is configured to provide a controlled entry of a tube carrier 126 from a first transportation element 112 or lane 116, 118 into the turntable 102 and/or a controlled exit of a tube carrier 126 out of the turntable 102 to/on a second transportation element 114 or lane 118, 120. Gate mechanism 700 can comprise one gate element 702 or two or more gate elements 702. One, some or all of the gate elements 702 can be arranged as an entry gate element 704 configured to control an entry of the tube carriers 126 into the turntable 102.

One, some or all of the gate elements 702 can be arranged as an exit gate element 706 configured to control an exit of the tube carriers 126 out of the turntable 102.

Fig. 8 shows a schematic view of exemplary embodiments 800, 802 of gate element 702 and its transmission unit 804. A barrier rod 806 of the gate element 702 is rotatably fixed to a carrier body 808 of the gate element 702. Barrier rod 806 further is connected to transmission unit 804, an actuator element 810 is translationally movable back and forth along the carrier body 808. The back-and-forth movement of the actuator element 810 being driven is translated into a rotational movement of barrier rod 806 - particularly about a vertical axis - by means of the respective transmission unit 804. In the gate element embodiment 800, transmission unit 804 comprises a motion link mechanism 812, whereas the transmission unit 804 of gate element embodiment 802 comprises a rack and pinion drive 814. Gate element 702 can have a connecting rod 816, by means of which actuator element 810 and transmission unit 814 are connected kinematically.

Actuator element 810 can have a drive pin 818, which - in intended installation position of the gate element 702 in the turntable 102 - engages in an endless wave-shaped control groove (not shown) of the rotating means 104. As a result, by means of the spinning rotating means 104 actuator element 810 is moved back and forth translationally driving the transmission unit 804 and regularly rotating barrier rod 806.

Fig. 9 shows another entry control mechanism 900 for the turntable 102 or the transportation system 100. Entry control mechanism 900 has a rocker 902 and an actuating lever 904, wherein actuating lever 904 is rotatable fixed and in functional connection with rocker 902. A convex part 906 of actuating lever 904 is configured to slide on the outer circumference of recess wheel 108 and/or on an outer circumference of the tube carriers 126 tangentially. Convex part 904 is also configured to protrude in the recesses 110 of recess wheel 108 as they are passing by empty (i.e., without accommodating a tube carrier 126). As long as convex part 904 contacts/slides on the outer circumference of recess wheel 108 or of tube carrier 126, actuating lever 904 is in its first lever position (as shown in Fig. 9). In the first lever position, actuating lever 904 locks rocker 902 from moving out of a first rocker position, in which a tube carrier 126 can pass rocker 902 and enter the turntable 102 by entering one of the recesses 110. As long as convex part 904 protrudes in one of the recesses 110, actuating lever 904 is in its second lever position (not shown). In the second lever position, the rocker 902 can rotatably move in its second rocker position, in which a tube carrier 126 cannot pass rocker 902 and, therefore, is prevented from entering the turntable 102 or the recess wheel 108, respectively. Rocker 902 can be spring loaded, e.g., biased towards its second rocker position.

A further entry control mechanism 908 is shown in Fig. 9. Entry control mechanism 908 comprises a latch 910 being rotatably mounted to turntable 102 or one of the transportation elements 112, 114. Latch 910 blocks a tube carrier 126 from entering the turntable 102 or the recess wheel 108, respectively, when latch 910 is held in blocking position as shown in Fig. 9. When latch 910 rotated into a recess 110, a tube carrier 126 can pass latch 910 in its pass-by position and enter the turntable 102 by entering one of the recesses 110. Latch 910 can be spring loaded, e.g., biased towards its pass-by position.

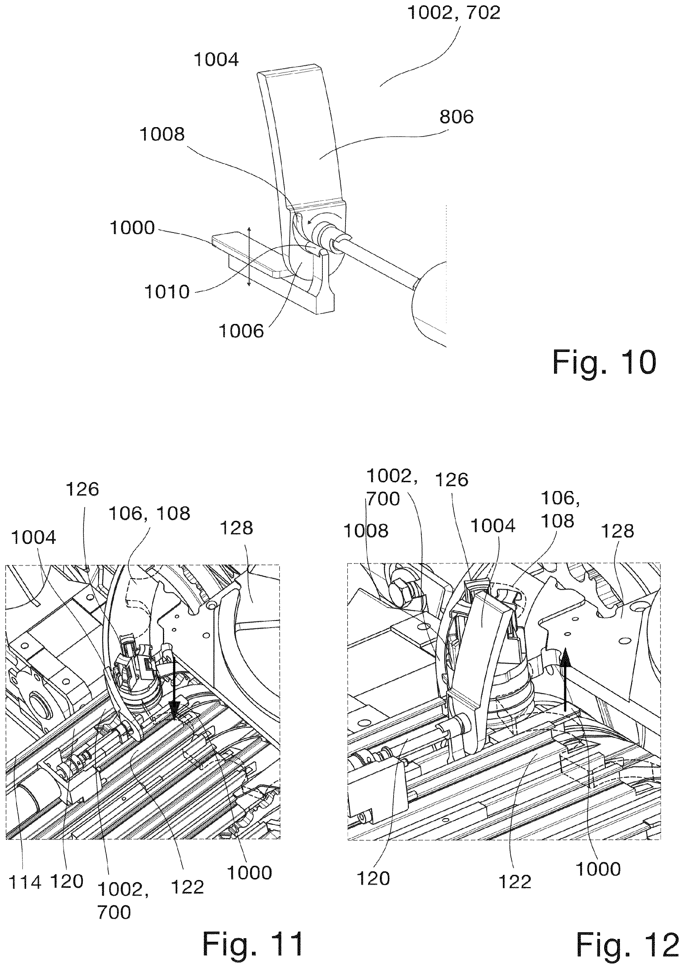

Fig. 10 shows a schematic view of a barrier element 1000 of a further embodiment 1002 of the gate element 702 of the gate mechanism 700. As can be seen in Fig. 10, barrier rod 806 of gate element embodiment 1002 is formed as a rotary barrier body 1004 rotatable about a horizontal axis. Further, gate element 702 in its embodiment 1002 has a lift transmission 1006 configured to lift/elevate and lower the barrier element 1000. In particular, lift transmission 1006 can comprise a transmission groove 1008 fixed to rotary barrier body 1004 and a transmission pin 1010 fixed to barrier element 1000. When rotary barrier body 1004 is in its closed position (as shown in Fig. 11), barrier element 1000 is arranged in its lowered position. Thereby, when rotary barrier body 1004 is in its opened position (as shown in Fig. 12), barrier element 1000 is arranged in its elevated position.

Fig. 11 shows a schematic view of a section of the transportation system 100, wherein the gate mechanism 700 blocks a tube carrier 126 from leaving the turntable 102 on/to second transportation lane 120 by means of gate element embodiment 1002 of gate element 702. Rotary barrier body 1004 is in its closed position so that barrier element 1000 (arranged between second transportation lanes 120, 122) is adjusted in its lowered position, allowing, therefore, that the tube carrier 126 moved by the recess wheel 108 is passed over second transportation lane 120. Tube carrier 126 slides along rotary barrier body 1004, which is blocking second transportation lane 120 for tube carrier 126, so that it will be moved further by means of the recess wheel 108, for instance to another one of the transportation lanes 116, 118, 122.

Fig. 12 shows a schematic view of the section shown in Fig. 11, wherein the gate mechanism 700 allows a tube carrier 126 to leave the turntable 102 on/to second transportation lane 120 by means of gate element embodiment 1002 of gate element 702. Rotary barrier body 1004 is in its opened position so that barrier element 1000 is arranged in its elevated position, cf. Fig. 10. In this state, a transfer of a tube carrier 126 by means of recess wheel 108 is blocked as barrier element 1000 is ascended between second transportation lanes 120, 122. So, tube carrier 126 moved by recess wheel 108 hits ascended/elevated barrier element 1000, wherein simultaneously an exit to second transportation lane 120 for tube carrier 126 is clear due to the opened position of rotary barrier body 1004. As a result, tube carrier 126 leaves recess wheel 108 and, consequently, turntable 102 via second transportation lane 120.

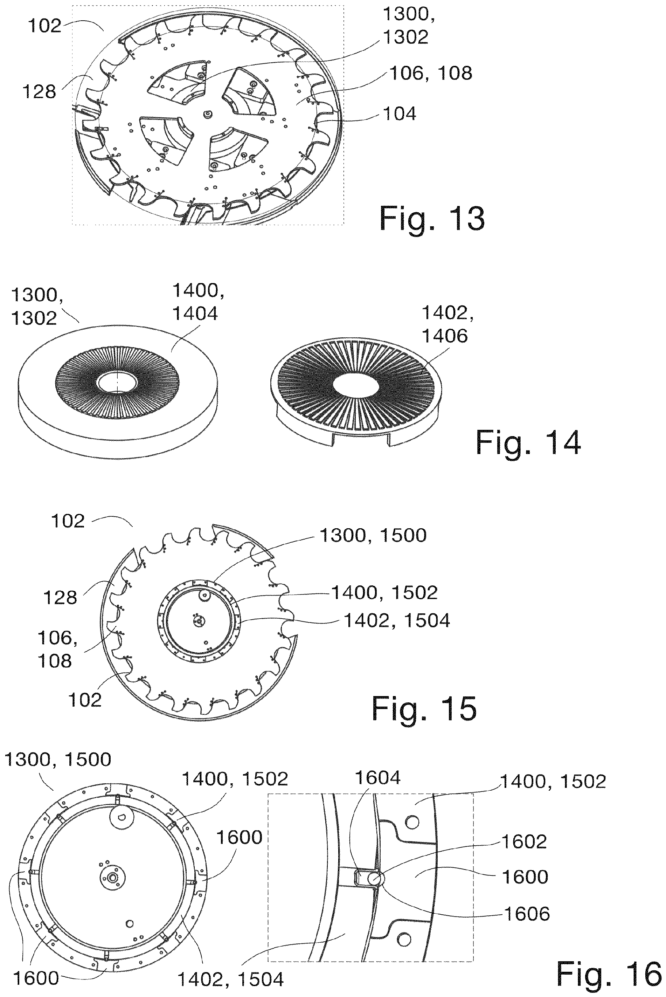

Fig. 13 shows a schematic view of turntable 102 comprising recess wheel 108 shown in Fig. 6 and a clutch 1300 mounted between base plate 128 and recess wheel 108, wherein clutch 1300 in a possible embodiment 1302 can be a claw coupling. Clutch elements 1400, 1402 are shown in schematic view in Fig. 14.

In Fig. 14, a first clutch element 1400 is a first claw coupling element 1404 and can, for example, be fixedly connected to a drive axle (not shown) of a drive system by means of which rotating means 104 is driven. Second clutch element 1402 is a second claw coupling element 1406 and can be fixedly connected to the rotating means 104, e.g., to the recess wheel 108. In a completely closed or coupled state of clutch 1300, clutch elements 1400, 1402 are engaged with each other, so a full amount of torque provided by the drive system is used to rotate recess wheel 108, whereas, in a completely open or decoupled state of clutch 1300, clutch elements can be rotated relative to each other, so that none of the torque provided by the drive system is used to rotate recess wheel 108. Optionally, clutch 1300 can further be configured to be operated in a partially opened or partially closed state, wherein it is operated with slip between clutch elements 1400, 1402. In this case, clutch elements 1400, 1402 are in contact with each other but can be rotated relative to each other, so that the torque provided by the drive system is partially used to rotate the recess wheel 108. Clutch 1300 is operated in the closed/coupled mode, in the open/decoupled mode or in the slip mode, depending on an external wheel braking force applied to recess wheel 108.

Fig. 15 shows a schematic view of turntable 102 comprising the recess wheel 108 shown in Fig. 6 and the clutch 1300 in another embodiment 1500. In its embodiment 1500, the first clutch element 1400 is an inner clutch ring 1502 fixedly connected to the drive axle of the drive system, whereas the second clutch element 1402 is an outer clutch ring 1504 fixedly connected to the rotating means 104, for instance, to the recess wheel 108. Clutch rings 1502, 1504 of clutch embodiment 1500 are shown in Fig. 16 in greater detail.

Fig. 16 shows a schematic view of clutch elements 1400, 1402 or clutch rings 1502, 1504, respectively, of clutch embodiment 1500 shown in Fig. 15. Clutch 1300 in its embodiment 1500 comprises a plurality of snap in mechanisms 1600. The respective snap in mechanism 1600 has a spherical pressure piece 1602 sitting in a radial pressure piece slot 1604 of inner clutch ring 1502 and being biased radially outwards by means of a clutch spring element (not shown). Outer clutch ring 1504 has a snap in opening 1606 spherical pressure piece 1602 is snapped into positively-interlocking clutch rings 1502, 1504, which are coaxially and concentrically arranged. If the external wheel braking force is applied to recess wheel 108, spherical pressure piece 1602 is pushed radially inwards by snap in opening 1606, as outer clutch ring 1504 is braked relatively to inner clutch ring 1502. When external wheel braking force is high enough that spherical pressure piece 1602 is pushed radially inwards, overcoming a spring force by means of which spherical pressure piece 1602 is biased radially outwards, spherical pressure piece 1602 plunges into pressure piece slot 1604, thereby decoupling clutch rings 1502, 1504 from each other. Subsequently, clutch rings 1502, 1504 rotate relative to each other.

Both clutch embodiments 1400, 1500 may be self-recoupling. When external wheel brake force becomes small enough or is removed entirely, claw coupling elements 1404, 1406 or clutch rings 1502, 1504 may be configured to reengage with each other.

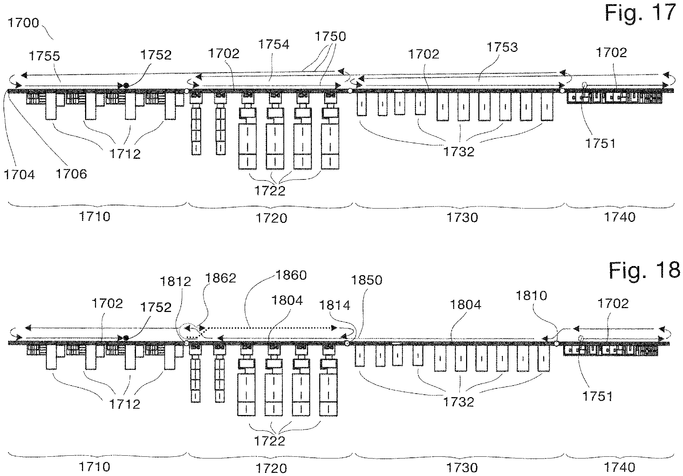

Fig. 17 shows a transport system 1700 for biological samples in a standard configuration as internally used. The transport system 1700 comprises a at least four of transportation elements 1702. Each transportation element 1702 has a proximal lane 1704 in which carriers with tubes with biological samples can be transported from left to right and a distal lane 1706, in which tubes can be moved from right to left.

The transport system 1700 can be divided in four sections dependent on the functions/devices provided next to the proximal lane 1704. In a left section 1710 carriers with our without tubes can be stored in storage elements 1712. In a middle right section 1730, tubes can be provided to a first type of analyzers 1732. In these types, tubes are not removed from the proximal lane 1706 of the transportation element 1702. In a middle left section 1720, tubes can be provided to a second type of analyzers 1722. In these types, tubes are removed from the proximal lane 1706 of the transportation element 1702 and stored in the analyzer, at least for the time needed for an analysis. Afterwards the tubes are released again to the transportation element. Normally, only the tubes are removed from the transportation element and the carrier remain on the transportation element. But other embodiments are possible. In a right section 1740 further functions/devices may be provided.

In order to access the storage facilities 1712, the first analyzers 1722, and the second analyzers 1732, the tubes must be carried on the proximal lane 1706 and access the analyzers from left to right. This is caused by the way the tubes access the analyzers, which is not explained here because it is not necessary to understand the embodiments of this disclosure. In order to process tubes at first by the first analyzers 1732, afterwards by the second analyzers 1722, and afterwards storing them in the storage facilitates 1712 a tube must be carried as indicated by the arrows-line 1750, with a start point 1751 in the right section 1740 and end point 1752 in the left section 1710. Therefore, after each section the tubes must be placed from the proximal lane 1706 to the distal lane 1704 in order to move in the direction from right to left. This can be done by turntables or other elements that are configured to transfer a carrier/tube from a proximal lane 1706 to a distal lane 1704.

A problem of the standard tube path 1750 is that once a tube has passed a section with a certain function, i.e. section 1730 with the first type analyzers 1732, it needs to be carried the whole length of this section backwards in order to reach the next section, i.e. section 1720 with the second type analyzers 1722. In other words, the tubes must be carried in loops 1753, 1754, and 1755 in order to reach their functions 1732, 1722, 1712. Therefore, the tubes essentially have to travel the whole length of the transportation system 1700 twice. This reduces the throughput of the system.

Fig. 18 shows a solution 1800 of the throughput problem of the standard configuration 1700. As in the standard configuration 1700, the system's functions (storages 1712, analyzers 1722, 1732) are located on the right side, which can be, e.g., located next to a wall of the room in which the system is located. Different to the standard configuration 1700, in sections 1720 and 1730 the system 1800 comprises transportation elements 1802, in which the proximal lane transports the carriers/tubes from right to left (and not from left to right). Additionally, a distal lane of the transportation elements 1802 can be configured to transport carriers/tubes from left to right. In one embodiment of the system 1800, the transportation elements 1802 can be of the same type as the transportation elements 1702 but arranged in an inverse orientation, such that proximal lane and distal lane are swapped.

In the system 1800 a tube starting from the same start point 1751 and ending at the same end point 1752 as in the standard system 1700 will take a different path 1850. Since the tube starts in section 1740, which is equipped with the same transportation element 1702 as the standard system, the tube will loop at the right end of the system in order to travel from right to left on the distal lane. However, when entering section 1730, the tube changes from the distal lane to the proximal lane albeit still traveling in the same direction (right to left). This is done by a turntable 1810, which is configured to perform this lane change. Therefore, the turntable 1810 and/or other elements of the transport system 1800 can comprise one or more exit elements that prevent a tube coming from the distal lane of section 1740 from being released to the distal lane of section 1730 but allow the tube to be released to the proximal lane of section 1730.

After the tube has been transferred to the proximal lane of a transport element in section 1730 it can be transported along the first type analyzers 1732. These analyzers need to be accessible (also) from right to left. After the tube has been transported along section 1730 the tube can enter section 1720 and be processed by the second type analyzers 1722 (they also need to be accessible from right to left). Since the transport elements of both sections are configured such that the tubes can travel right to left on the proximal lanes, the tubes need not to be transported in loops as in the system 1700. Rather the tube can be transported directly from the first type analyzers to the second type analyzers, i.e. with no unnecessary pathways to travel. When the tube enters section 1710 it is transferred from the proximal lane of section 1720 to the distal lane of section 1710, in order to keep its travel direction from right to left. This can be done by a turntable 1812, which is configured just inversely as turntable 1810. The change of lanes is necessary, since the storage elements 1712 may only be accessible from left to right.

By the configuration 1800 the length of path 1850 is much shorter than the length of path 1750 of the standard configuration 1700. Based on turntable such as turntables 1810, 1012 a system can be configured more flexible and functions which can be accessed from right to left can be combined with functions that can be accessed (only) from left to right, wherein loops may only be necessary in cases where functions that are to be accessed from left to right are connected to functions that are to be accessed from right to left.

The tube transportation system 1800 (or the system 1700) can further be configured for a dynamic storage function. In particular the second analyzers 1722 located in section 1720 may process samples by removing the tubes from the transportation elements 1702, 1804 and after analysis bringing them back to the transportation element s 1804. That means, that after the content of a tube has been analyzed by one of the analyzers 1722 a free carrier needs to be provided in order to transport the tube from section 1720 to section 1710. Therefore, the distal lane of a transportation element of the section 1720 with the second type analyzers 1722 can be configured with a storage function.

This storage function can be realized, e.g. by one or more additional lanes, in particular with a slower transport velocity than the first lane of the distal lanes. Additionally or alternatively, the distal lane of section 1720 can comprise one or more storage facilitates on its own.

A carrier for a tube released by an analyzer 1722 can be provided from the storage facilities 1712. In case of the system 1800, the turntable 1812 can transfer carrier from the proximal lane to the distal lane of the transportation element 1804 of section 1720, as depicted by path 1860 (dotted path). The carrier can then be stored by the distal lane's storage function (in particular using one of the alternatives described above). In case the carrier is needed, it can be provided by the being transferred from the distal lane to the proximal lane, in particular by a turntable or any other crossover transfer element 1814 at the end of the transportation element of section 1720.

Additionally or alternatively, an empty carrier can be provided by one of the carriers that just brought a tube to the second type analyzers 1722. Such a carrier can then be transferred to the distal lane by the turntable 1812, as depicted by path 1862 (dotted crossover path). The turntable 1812 together with the transfer element 1814 (and the reservoir 1860) assures that empty carriers are kept close by the second type analyzers for which they are needed. In particular carriers just freed from a tube by analyzers 1722 can be used for tubes released from analyzers 1722 if the input rate equals the output rate of tubes. In case the output rate of tubes by analyzers 1722 is higher than the input rate, then additional carriers may be provided, e.g. from storage facilities 1712.

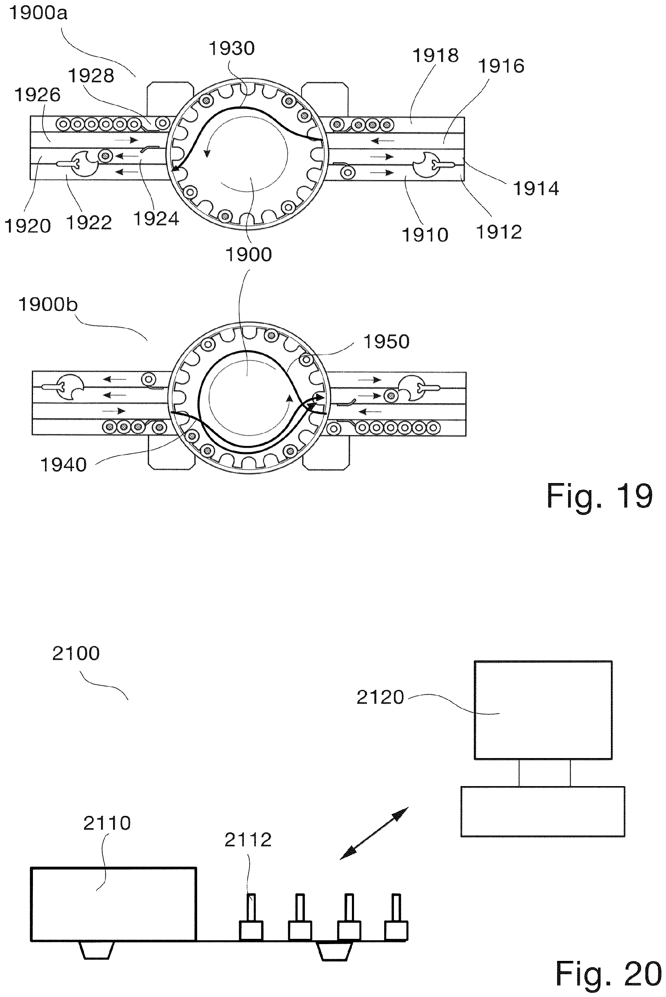

Fig. 19 shows a turntable in two configurations, which can be used for the tube transportation system 1800. The turntable is connected to two transportation elements 1910, 1920. Each transportation element has two proximal lanes and two distal lanes.

In the upper configuration 1900a the turntable can be used, e.g., as turntable 1810. The proximal lanes 1912, 1914 of transportation element 1910 are configured to transport carriers/tubes from left to right. The proximal lanes 1922, 1924 of transportation element 1920 are configured to transport carriers/tubes from right to left. The distal lanes 1926, 1928 of transportation element 1920 are configured to transport carriers/tubes from left to right.

By the use of release elements (e.g. mechanical, electrical, and/or magnetically release elements) the turntable can transport a carrier/tube from being carried by one of the distal lanes 1916, 1918 of transportation element 1910 to one of the proximal lanes 1922, 1924 of transportation element 1920, which also transports carriers/tubes from left to right. By being transferred to one of the proximal lanes the tube can be accessed, e.g. by one of the first type analyzers 1732. The turntable 1900 has to transport the carrier/tube along the path 1930.

In the lower configuration 1900b the turntable can be used, e.g., as turntable 1812. In configuration 1900b is similar to the configuration 1900a, but the direction of the proximal lanes and of the distal lanes are swapped. In this configuration the turntable can transfer carriers being transported on a proximal lane of the left transportation element (e.g., coming from the storage elements 1712) to the distal lane of the right transportation element. The turntable 1900 therefore has to transport the carrier/tube along the path 1940. Additionally or alternatively, carriers from a proximal lane of the right transportation element can be transferred to the distal lane of the same transportation element. For a U-turn the turntable 1900 may transport the carrier/tube along the path 1950.

Fig. 20 illustrates an automatic laboratory system 2000 configured to perform a method described in this disclosure, e.g. the method described in connection with Fig. 1. The system 2000 comprises an automated laboratory 2010 and a computer 2020. The automated laboratory 2010 may be configured to aliquot and analyze samples provided in tubes 2012 of different types and with different requirements. The tubes are transported in carriers. Hence, the system can transport empty carriers or loaded carriers. The automated laboratory 2010 is connected to the computer 2020. The computer 2020 is configured to execute at least a part of a method described herein. The computer 2020 may be configured to execute a machine learning algorithm. The computer 2020 and the automated laboratory 2010 may be separate entities but can also be integrated together in one common housing. The computer 2020 may be part of a central processing system of the automated laboratory 2010 and/or the computer 2020 may be part of a subcomponent of the automated laboratory 2010, such as a sensor, an actor, a camera, an articulated arm, an aliquotation unit, an analyzing unit etc. of the automated laboratory 2010.

The computer 2200 may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer 2200 may comprise any circuit or combination of circuits. In one embodiment, the computer 220 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), any other type of processor or processing circuit.

A computer 2200 configured to execute a method according to the present disclosure can be a network and/or cloud computer. In particular, such a computer can control a plurality of automated laboratory systems concurrently. In this way a computer can be configured to organize a transfer of a sample/tube between different automated laboratory systems that the computer controls or at least is configured to communicate with. For example, in case an aliquoter of a first automated laboratory controlled by a computer is not available, one or more samples scheduled for aliquotation at this facility can be sent to a second automated laboratory that is also controlled by this computer. Process data, e.g. a required configuration for an aliquotation, centrifugation, and/or testing of the transferred sample(s)/tube(s) are already known by the computer and may just be assigned to the second automated laboratory.

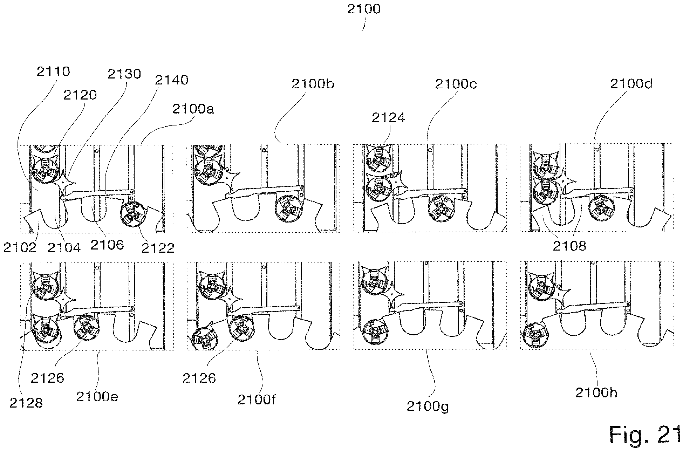

Fig. 21 shows an entry-system 2100 for moving biological samples with a mechanical entry element. The system 2100 is shown in different states 2100a - 2100h of a blocking/entry procedure.

The system is attached to a transportation system for transporting carriers 2120, 2122, 2124, 2126. The transportation system comprises a turntable 2102, which comprises a plurality of recesses 2104, 2106. In each recess 2104, 2106 a carrier can be transported from an incoming transportation element 2110 to an outgoing transportation element.

In order to control the transportation of the carriers 2120 - 2124, the entry to the turntable 2102 is controlled by the entry-system. The entry system is configured to control for single carriers, if they can enter the turntable 2102 or not. Therefore, the entry system comprises a carrier stopping wheel 2130. The carrier stopping wheel comprises protrusions and/or recesses each configured to block an entry of a respective carrier into the turntable. The carrier wheel 2130 is controlled by a control lever 2140 such that it either blocks a carrier from entering the turntable or that it allows a carrier to enter the turntable. Therefore, the control lever is configured to mechanical interact with the turntable and with a carrier which is already in the turntable, and which occupies a recess that would be needed for an incoming carrier.

Subfigure 2100a, describes an initial configuration. An incoming carrier 2120 arrives at the carrier stopping wheel 2130. A recess 2106 of the turntable, which would be needed for the incoming carrier is not occupied. In subfigure 2100b it is shown that the control lever can move into the free recess 2106 and thereby allowing the carrier stopping wheel to turn. Subfigure 2100c shows the carrier stopping wheel after a further rotation, by which the carrier 2120 moves further into the direction of the turntable 2102. Subfigure 2100d shows how the control lever is pushed up after a further rotation thereby blocking the next carrier 2124. This is caused by the protruding part 2108 of the turntable 2102. Subfigure 2100e shows that the lever is afterwards pushed up by the carrier 2126, which is already transported by the turntable, and which occupies the recess which would be needed for the next carrier 2128. The subfigure 2100e also shows how the first approaching carrier 2120 moves into the recess. Subfigures 2100f and 2100g show how the control lever is pushed up by the carrier 2126 and a protruding element of the turntable thereby blocking the wheel 2130 and preventing the next carrier from moving towards the turntable. Subfigure 2100h shows how the next free recess allows the control lever to move down and unblocks the carrier stopping wheel 2130 freeing the way for the next carrier to enter the turntable.

Furthermore, the entry-system additionally helps to let the carrier contact the turntable at a desired position. This can be seen, e.g., in subfigure 2100d. The carrier allowed to enter the turntable will contact the turntable at an edge of a protruding element 2108 that belongs to the recess in which it will finally be placed. Thereby, it ca enter smoothly into a recess of the turntable. Coincidental blocking situations are prevented, which can happen when the carriers contacts the turntable in a random manner.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### List of reference signs

- 100: transportation system
- 102: turntable
- 104: rotating means
- 106: guiding wheel
- 108: recess wheel
- 110: recess
- 112: first transportation element
- 114: second transportation element
- 116: first transportation lane
- 118: first transportation lane
- 120: second transportation lane
- 122: second transportation lane
- 124: conveyor motor
- 126: tube carrier
- 128: base plate
- 130: carrier rack
- 132: base plate support
- 230: notch
- 232: transfer guiding plates
- 402: drive shaft
- 404: central hub
- 406: accommodation recess
- 500: base plate variation
- 502: base plate variation
- 504: base plate variation
- 506: base plate variation
- 508: base plate variation
- 510: adapter plate
- 512: disk segment
- 514: disk segment
- 516: disk segment
- 518: fastening segment
- 520: fastening section
- 522: notch edge
- 600: bow spring element
- 602: area
- 604: bow spring
- 606: recess edge
- 608: recess edge
- 610: attachment body
- 700: gate mechanism
- 702: gate element
- 704: entry gate element
- 706: exit gate element
- 800: gate element embodiment
- 802: gate element embodiment
- 804: transmission unit
- 806: barrier rod
- 808: carrier body
- 810: actuator element
- 812: motion link mechanism
- 814: rack and pinion drive
- 816: connecting rod
- 818: drive pin
- 900: entry control mechanism
- 902: rocker
- 904: actuating lever
- 906: convex part
- 908: entry control mechanism
- 910: latch
- 1000: barrier element
- 1002: gate element embodiment
- 1004: rotary barrier body
- 1006: lift transmission
- 1008: transmission groove
- 1010: transmission pin
- 1300: clutch
- 1302: clutch embodiment
- 1400: first clutch element
- 1402: second clutch element
- 1404: claw coupling element
- 1406: second claw coupling element
- 1500: clutch embodiment
- 1502: inner clutch ring
- 1504: outer clutch ring
- 1600: snap in mechanism
- 1602: spherical pressure piece
- 1604: pressure piece slot
- 1606: snap in opening
- 1700: transport system in standard configuration
- 1702: transportation element
- 1704: proximal lane
- 1706: distal lane
- 1710: storage section
- 1712: storage elements
- 1720: second type analyzer section
- 1722: second type analyzer
- 1730: first type analyzers section
- 1732: first type analyzers
- 1740: left section
- 1750: standard tube paths
- 1751: start point
- 1752: end point
- 1753: loop section 1730
- 1754: loop section 1720
- 1755: loop section 1710
- 1802: inverse transportation element
- 1810: turntable
- 1850: shorter path
- 1860: carrier provision by storage facility 1712
- 1862: carrier provision from proximal lane
- 1900a: configuration turntable 1810
- 1900b: configuration turntable 1812
- 1910: transportation element
- 1912: proximal lane
- 1914: proximal lane
- 1916: distal lane
- 1918: distal lane
- 1920: transportation element
- 1922: proximal lane
- 1924: proximal lane
- 1926: distal lane
- 1928: distal lane
- 1930: turntable transfer path
- 1940: turntable transfer path
- 1950: turntable transfer path
- 2000: automated laboratory system
- 2010: automated laboratory
- 2012: sample in tube in carrier
- 2020: computer
- 2100: block and entry system and procedure
- 2100a: block by turntable
- 2100b: allow carrier to enter
- 2100c: carrier moves towards turntable
- 2100d: carrier waits for next recess
- 2100e: carrier enters turntable
- 2100f: next carrier blocked from entering
- 2100g: block by turntable
- 2100h: allow carrier to enter
- 2102: turntable
- 2104: recess
- 2106: recess
- 2108: protruding part
- 2110: transportation element
- 2120: carrier
- 2122: carrier
- 2124: carrier
- 2126: carrier
- 2128: carrier
- 2130: carrier stopping wheel
- 2140: control lever

## Claims

1. A turntable (102) for transferring diagnostical carriers between transporting elements,
configured to:
- receive a plurality of carriers (126) from at least a first transportation element (112) ;
- move the plurality of carriers to at least a second transportation element (114) ;
- relieve the plurality of carriers individually to at least the second transportation element;
wherein the movement from the first transportation element to at least the second transportation element is performed by a rotating means (104) of the turntable.

2. The turntable (102) according to the preceding claim,
comprising:
- a base plate (128) configured:
-- to connect a plurality of transportation elements (112, 114) in a pre-defined configuration; and
-- to be detachably connected to the rotating means (103).

3. The turntable (102) according to one of the preceding claims,
comprising:
- a drive system configured to move the rotating means (104) ;
- a clutch (1300) configured to decouple the drive system from the rotating means (104) if a pre-defined decoupling-force is exceeded.

4. The turntable (102) according to the preceding claim,
wherein the clutch (1300) is configured such that the de-coupling ends in case of one or more of the following criteria:
- after a pre-defined rotation distance;
- at a pre-defined re-coupling point;
- if a force between the rotation means and the drive system, after de-coupling, falls below a pre-defined threshold, in particular below the de-coupling force.

5. The turntable (102) according to one of the preceding claims,
configured to:
- receive a plurality of carriers (126) from a transportation element (112, 114) with a plurality of lanes, each sequentially providing carriers towards the device; and/or
- relieve a plurality of carriers (126) to a transportation element with a plurality of lanes, each sequentially transferring carriers away from the device.

6. The turntable (102) according to one of the preceding claims,
comprising:
- a plurality of recesses (110), wherein each recess is configured to host a carrier (126) while the device rotates.

7. The turntable (102) according to one of the preceding claims,
configured to:
- provide a controlled entry (704) and/or exit (706) of a carrier (126) from a transportation element (112, 114) into the turntable, in particular by a passive-mechanically controlled and/or an actively controlled mechanism.

8. The turntable (102) according to the preceding claim,
comprising a mechanical stopper mounted on a static part of the turntable, in particular on the base plate, such that the stopper controls an entry and an exit by being moved by the rotating means of the turntable.

9. The turntable (102) according to one of the preceding claims,
configured to:
- detect that a carriers (126) is stuck at the rotating means (104) ; and
- perform a backward motion such that the stuck carriers can move into a recess of the rotation wheel.

10. The turntable (102) according to one of the preceding claims,
configured to:
- actively attach and/or release a carrier (126) to the turntable during rotation, in particular:
-- mechanically,
-- electrically, and/or
-- magnetically.

11. The turntable (102) according to one of the preceding claims,
configured to:
- receive carriers (126) from and relieve carriers to the same transportation element (112, 114).

12. The turntable (102) according to one of the preceding claims,
configured to:
- receive carriers (126) from a first transport element (1910), which has a first proximal lane (1706) for transporting carriers in a first direction and a first distal lane (1704) for transporting carriers in a second direction, which is opposite to the first direction;
- release carriers to a second transport element (1920), which has a first proximal lane for transporting carriers in the second direction and a first distal lane for transporting carriers in the first direction;
such that the carriers travel on both transport elements in the same direction.

13. A system for transportation (1700) of biological samples,
comprising:
- at least two transportation elements (1702);
- at least one turntable (102) according to one of the preceding claims;
configured to:
- transfer a plurality of sample carriers (126) from a first of the transportation elements over the turntable to a second of the transportation elements.

14. The system according to one of the preceding claims,
comprising a turntable (102) that transfers carriers (126) to three or more transportation elements.

15. The system according to one of the preceding claims,
comprising:
- an entry element (704) configured to control an entry of a carrier (126) from a transportation element to the turntable; and/or
- an exit element (706) configured to control an exit of a carrier (126) from the turntable to a transportation element.

16. The system according to the preceding claim,
comprising at least one entry element with:
- a carrier stopping means (2130);
- a control means (2140) configured to control the carrier stopping means such that it blocks or allows an entry of a carrier (2120) into a turntable (2102).

17. The system according to the preceding claim,
wherein the control means (2140) is configured to block or un-block the carrier stopping means (2130), in particular based on a mechanical interaction with a carrier (2126) and/or a protruding element (2108) of the turntable (2102).

18. The system according to one of the preceding claims,
comprising:
- at least one turntable (1810, 1812); and
- at least three transportation elements (1702, 1804);
wherein at least one turntable and two transportation elements form a path for a carrier when moved by the system;
configured to:
- provide at least two pre-defined paths for carriers, which in particular comprise a same turntable.

19. The system according to one of the preceding claims,
comprising:
- a first transportation element (1702) that has at least two lanes:
-- a first proximal lane (1706), configured to transport carriers in a first direction;
-- a first distal lane (1704), configured to transport carriers in a second direction opposite to the first direction;
- a second transportation element (1804) that has at least two lanes:
-- a first proximal lane, configured to transport carriers in the second direction;
-- a first distal lane, configured to transport carriers in a first direction;
and wherein the turntable is configured to transfer a carrier (126) from the distal lane of the first transportation element to the proximal lane of the second transportation element and/or vice versa.

20. The system according to one of the preceding claims,
comprising:
- one or more analyzers (1722, 1732) configured to receive and release tubes to a carrier (126), each, on a proximal side of a transportation element; and
- a first crossover (1814) element, in particular a second turntable, configured to move empty carriers after they passed the analyzers (1722) to a distal lane of the transportation element, in which the carriers are moved backwards along the analyzers again and/or moved to a buffer region;
- a second crossover element (1812), in particular a third turntable, configured to move empty carriers after they passed the analyzers on the distal lane to the proximal lane such that they are in a position to receive a tube, each, from one of the analyzers.
